# EUROPÄISCHE PATENTSCHRIFT

(11) **EP 2 779 937 B1**
(45) Veröffentlichungstag und Bekanntmachung des Hinweises auf die Patenterteilung: **20.02.2019**
(21) Anmeldenummer: 12790508.1
(22) Anmeldetag: 13.11.2012
(51) Int. Cl.: A61C 13/00, A61C 13/08, A61C 13/09

(54) **ROHLING FÜR KÜNSTLICHE ZÄHNE MIT MEHREREN UNTERSCHIEDLICHEN FARBSCHICHTEN UND VERFAHREN ZU DESSEN HERSTELLUNG**
BLANK FOR ARTIFICIAL TEETH, COMPRISING A PLURALITY OF DIFFERENT COLOURED LAYERS, AND A METHOD FOR PRODUCING SAME
ÉBAUCHE DE DENT ARTIFICIELLE PRÉSENTANT PLUSIEURS COUCHES DE COULEURS DIFFÉRENTES ET SON PROCÉDÉ DE FABRICATION

(30) Priorität: 15.11.2011 DE 102011055393; 02.02.2012 DE 202012100359 U
(43) Veröffentlichungstag der Anmeldung: 24.09.2014
(73) Patentinhaber: Kronacher Werkzeugbau Klug GmbH&Co. KG, 96524 Neuhaus-Schierschnitz (DE); Gerschütz-Rüth, Ralf, 83122 Samerberg (DE)
(72) Erfinder: GERSCHÜTZ-RÜTH, Ralf, 83122 Samerberg (DE); SCHIMEK, Johann, 73207 Plochingen (DE)
(74) Vertreter: Pröll, Jürgen
(86) Internationale Anmeldenummer: PCT/EP2012/072429
(87) Internationale Veröffentlichungsnummer: WO 2013/072287

(56) Entgegenhaltungen:
- DE-C2- 19 714 178
- US-A- 4 970 032
- US-A- 5 989 031

## Beschreibung

Die vorliegende Erfindung betrifft ein Verfahren zum Herstellen eines mehrere unterschiedliche Farbschichten aufweisenden Rohlings für künstliche Zähne aus Kunststoff, welcher in eine Form unter Druck eingebracht wird. Die Erfindung betrifft weiter einen Rohling für künstliche Zähne, welcher mehrere unterschiedliche Farbschichten aufweist.

Aus dem Stand der Technik ist es bekannt, Rohlinge für künstliche Zähne aus Keramiken oder Kunststoffen sowie auch Metalllegierungen herzustellen, wobei diese Materialen in eine Form gebracht und unter Druck und/oder Hitzeeinwirkung hergestellt werden. Aus diesem Rohling werden in weiteren Bearbeitungsschritten einzelne Zähne herausgearbeitet, beispielsweise durch Fräsen. Um ein möglichst natürliches Erscheinungsbild der künstlichen Zähne zu erzielen, ist es weiterhin bekannt, die künstlichen Zähne mit verschiedenen Farbschichten zu überziehen; beispielsweise können zwei oder drei Farbschichten aufgebracht werden. Eine erste Schicht umgibt dabei einen künstlichen Zahn fast vollständig, wobei eine zweite Schicht die erste Schicht teilweise umgibt und eine dritte Schicht wiederum nur einen Teil der zweiten Schicht umgibt. Weiterhin ist es auch bekannt, künstliche Zähne zu bemalen, um ein möglichst natürliches Erscheinungsbild zu erzielen.

Um Rohlinge bereitzustellen, die mehrere unterschiedliche Farbschichten aufweisen, wird im Stand der Technik vorgeschlagen, verschiedenfarbige Materialien oder ein Material, jedoch in verschiedenen Farbabstufungen, schichtweise in eine Form zu geben und diese dann zu verpressen. Die so erhaltenen Rohlinge weisen dadurch verschiedene Farbschichten auf.

Aus der DE 197 141 78 C2 sind ein Verfahren zur Herstellung eines mehrfarbigen Formkörpers für die Weiterverarbeitung zu einer Zahnrestauration und ein zugehöriger Formkörper bekannt. Bei dem Verfahren wird eine Pressmatrize, die im Wesentlichen die Form eines Formkörpers vorgibt, mit mindestens zwei unterschiedlich gefärbten Ausgangsmaterialien gefüllt. Anschließend werden die in der Pressmatrize eingefüllten Ausgangsmaterialien zu dem Formkörper verpresst. Der so erhaltene Formkörperrohling kann anschließend gesintert und einem Tempervorgang unterworfen werden. Der Formkörper soll dabei einen kontinuierlichen Farbverlauf sowie eine entsprechende gleichmäßige Durchfärbung aufweisen.

Aus der US 5,151,044 sind ein Verfahren zur Herstellung von künstlichen Zähnen und Kronen sowie ein nach dem Verfahren hergestellter künstlicher Zahn oder eine Krone bekannt. Ein Rohling zur Herstellung eines künstlichen Zahns weist einen, eine bestimmte Form aufweisenden Kernbereich und den Kernbereich umgebende weitere Schichten auf. Der Kernbereich und die weiteren Schichten weisen dabei verschiedene Farbgebungen auf und erstrecken sich in verschiedenen Formen und Ausmaßen in dem Rohling.

Von dem Rohling kann anschließend Material derart abgetragen werden, dass die Form des zu fertigenden Zahns mit unterschiedlichen Farbabstufungen erreicht wird. Die verschiedenen Farbabstufungen werden durch den Verlauf der verschiedenen Schichten und eine selektive Materialentfernung erreicht. Je nach dem, wie der Zahn aus dem Rohling gefertigt wird, umfasst der fertige Zahn die Schichten vollständig oder nur teilweise. Auf Grund der unterschiedlichen Schichtdicken wird dabei der Farbverlauf erzielt.

Aus US 4,970,032 sind ein Verfahren zur Herstellung von künstlichen Zähnen und Kronen sowie ein nach dem Verfahren hergestellter künstlicher Zahn oder eine Krone bekannt, welche der Lehre von US 5,151,044 entsprechen.

US 5,989,031 offenbart einen Kunststoffzahn, der durch Aufspritzen mehrerer Schichten hergestellt wird, wobei die Dicke und Transparenz der Schichten für den Farbverlauf des Kunststoffzahns maßgeblich ist.

In der WO 2008/083358 A1 werden ein Rohling für künstliche Zähne und ein Verfahren zur Herstellung eines derartigen Rohlings beschrieben, wobei der Rohling eine Vielzahl von übereinander gelagerten Bereichen umfasst und ein künstlicher Zahn analog zu US 5,151,044 erhalten wird.

In der WO 2010/010082 A1 werden ein Formkörper aus formstabilisiertem Material und ein Verfahren zu seiner Herstellung beschrieben, wobei der Formkörper mindestens einen ersten Bestandteil und einen zweiten Bestandteil aufweist und der zweite Bestandteil eine andere Pigmentierung als der erste Bestandteil hat. Dabei ist der zweite Bestandteil in dem ersten Bestandteil unter Ausbildung einer Grenzfläche so angeordnet, dass die Grenzfläche eine räumlich gekrümmte Fläche darstellt.

Jedoch weisen Formkörper, wie sie beispielsweise aus der DE 197 141 78 C2 bekannt sind, sichtbare Trennlinien zwischen den verschiedenen Materialien auf. Die Übergänge der verschiedenen Farbschichten werden bei den im Stand der Technik bekannten Formkörpern zwar unauffälliger, bieten aber auf Grund der verwendeten Verfahren keinen homogenen Farbübergang. Durch das Verpressen und das anschließende Erhitzen wird versucht, zwei aneinander angrenzende Farbschichten zu vermischen, um einen kontinuierlichen Farbübergang zu erreichen. Jedoch sind diese Farbübergänge bei den fertigen Formkörpern trotzdem sichtbar. Künstliche Zähne, die aus solchen Formkörpern gefertigt werden, weisen daher einen unnatürlichen Farbübergang auf, welcher dem Erscheinungsbild natürlicher Zähne nur bedingt nahe kommt.

Darüber hinaus sind derartige Verfahren fertigungstechnisch nachteilig, da sie sehr zeitintensiv sind und mehrere Bearbeitungsschritte umfassen. Die Herstellung kann sich über mehrere Stunden erstrecken und derartige Formkörper für den Zahnersatz sind verhältnismäßig teuer.

Aufgabe der vorliegenden Erfindung ist es daher, ein Verfahren zum Herstellen eines mehrere unterschiedliche Farbschichten aufweisenden Rohlings für künstliche Zähne aus Kunststoff bereitzustellen, wobei der Rohling auf einfache Art und Weise gefertigt wird und einen homogenen Farbübergang aufweist. Darüber hinaus ist es Aufgabe der vorliegenden Erfindung, einen derartigen Rohling anzugeben.

Diese Aufgabe wird durch ein Verfahren nach Anspruch 1 und einen Rohling nach Anspruch 12 gelöst. Erfindungsgemäß wird die Aufgabe durch ein Verfahren zum Herstellen eines mehrere unterschiedliche Farbschichten aufweisenden Rohlings für künstliche Zähne aus Kunststoff, der in eine Form unter Druck eingebracht wird, gelöst, wobei der Rohling aus einem thermoplastischen Kunststoff besteht und im Mehrkomponentenspritzgussverfahren in eine erste Kavität in einer Spritzgussform eine erste Kunststoffschicht mit einer ersten Pigmentierung eingebracht wird und in mindestens einer zweiten Kavität in der Spritzgussform mindestens eine weitere Kunststoffschicht aus dem gleichen Kunststoff mit einer helleren Pigmentierung gegenüber der ersten Kunststoffschicht eingebracht wird. Das Verfahren ermöglicht die Herstellung eines Rohlings für künstliche Zähne, wobei der Rohling einen homogenen Farbübergang aufweist und die aus dem Rohling hergestellten künstlichen Zähne dem Erscheinungsbild natürlicher Zähne sehr nahe kommen. Im Gegensatz zu den aus dem Stand der Technik bekannten Rohlingen weisen Rohlinge, die nach dem erfindungsgemäßen Verfahren hergestellt worden sind, keine sichtbaren Trennlinien auf, an welchen der Farbübergang zwischen zwei farblich verschiedenen ausgebildeten Materialien erkennbar ist. Durch das Einspritzen eines ersten thermoplastischen Kunststoffs und das anschließende Einspritzen des gleichen thermoplastischen Kunststoffs mit einer gegenüber dem ersten Kunststoff helleren Pigmentierung, wobei aber auch ein Schichtaufbau in umgekehrter Reihenfolge erfolgen kann, verbinden und vermischen sich die aneinander anliegenden Kunststoffschichten, so dass ein homogener Farbübergang erzielt wird. Da der Kunststoff der ersten Kunststoffschicht beim Aufbringen der zweiten Kunststoffschicht noch nicht erstarrt ist, wird die Ausbildung eines homogenen Farbübergangs begünstigt. Es können bei dem erfindungsgemäßen Verfahren eine Vielzahl von Schichten aufgespritzt werden, wodurch ein beliebiger Farbverlauf ausgebildet werden kann.

Bei dem Verfahren wird in eine Spritzgussform einer Spritzgussmaschine, wobei die Spritzgussform mindestens zwei Kavitäten aufweist, der erste thermoplastische Kunststoff in die erste Kavität eingespritzt und ein weiterer Kunststoff in der mindestens zweiten Kavität auf die erste Kunststoffschicht aufgespritzt. Die Spritzgussform ist dabei so ausgebildet, dass je nach Anzahl der Schichten entsprechend viele Kavitäten vorgesehen sind. Die Kavitäten können beispielsweise durch eine Spritzgussform gebildet werden, die den Hohlraum für die Aufnahme der Kunststoffe für jeden weiteren Kunststoff vergrößert. Für derartige Mehrkomponentenspritzgussverfahren ist es bekannt, unterschiedliche Werkzeugkonstruktionen einzusetzen, beispielsweise drehende Werkzeugsysteme (Drehteller, Drehwerkzeug, Drehkreuze bzw. -kerne, Umsetztechnik) und nicht drehende Werkzeugsysteme.

Das Verfahren ermöglicht zudem eine einfachere Herstellung gegenüber den im Stand der Technik bekannten Verfahren, da der Rohling für die künstlichen Zähne während des Spritzgussverfahrens vollständig hergestellt wird und keine anschließenden Bearbeitungsschritte, wie Sintern oder ein anschließendes Erhitzen, notwendig sind.

Weiterhin wird die erste Kunststoffschicht an der Seite, auf die die zweite Kunststoffschicht aufgebracht wird, mindestens teilweise mit einem Profil und/oder einer Struktur ausgebildet und weist an der anderen Seite eine homogene Oberfläche auf. Dadurch, dass die erste Kunststoffschicht mit einem Profil und/oder einer Struktur ausgebildet wird, wird ein homogener Farbübergang zwischen den beiden Kunststoffschichten weiter verbessert. Das Profil und/oder die Struktur können über ein Werkzeug der Spritzgussmaschine bzw. der Spritzgussform für die erste Kunststoffschicht ausgebildet werden. Das Profil und/oder die Struktur sorgen dafür, dass die Menge des Kunststoffs der zweiten Kunststoffschicht kontinuierlich zunehmen und damit das Verschmelzen und Vermischen mit der ersten Schicht in Richtung zu der zweiten Kunststoffschicht hin zunimmt. Als Folge hiervon ergibt sich ein homogener, kontinuierlicher Farbübergang ohne Trennlinien und Trennschichten. Der Rohling wird dabei im Wesentlichen scheibenförmig ausgebildet.

Die Profile und/oder Struktur der ersten und/oder zweiten Kunststoffschichten werden über die Fläche wellenförmig oder mit Erhebungen und/oder Vertiefungen ausgebildet. Die Erhebungen und/oder Vertiefungen können pyramidenförmig, zylindrisch, quaderförmig und in Reihen, welche versetzt zueinander angeordnet sein können, ausgebildet werden. Dabei können verschiedene Farbübergänge erreicht werden.

Weiterhin können mehrere Kunststoffschichten übereinander angeordnet sein, wobei die letzte Kunststoffschicht außen an einer Deckseite eine homogene Oberfläche aufweist. Die Deckseite kann dabei glatt ausgebildet sein, wobei während der Herstellung des Rohlings auch eine Bezeichnung, Nummerierung oder Ähnliches in oder auf die Deckseite ein- bzw. aufgebracht werden kann.

Weiterhin können die Dicke der ersten und/oder zweiten und/oder der weiteren Kunststoffschichten variabel ausgebildet werden. Die Dicke der Kunststoffschichten bestimmt dabei auch das Maß des Farbübergangs. Bei geringeren Dicken der Kunststoffschichten ergibt sich bei dem Rohling ein schnellerer Farbübergang und bei größeren Dicken der Kunststoffschichten ein langsamerer Farbübergang. Die Dicken der Kunststoffschichten können aber je nach Kunststoffschicht auch unterschiedlich ausgebildet sein. Dadurch können Rohlinge erhalten werden, welche verschiedenste Farbverläufe aufweisen. Auch die Tiefe der Profile und/oder Struktur der ersten und/oder zweiten und/oder weiteren Kunststoffschichten können variabel ausgebildet werden. Dies ermöglicht variable Farbübergänge, da durch die Profile und/oder Struktur festgelegt werden kann, inwieweit die Kunststoffe ineinander fließen/greifen und damit das Vermischen und Verschmelzen zweier Kunststoffschichten mit unterschiedlicher Pigmentierung erfolgen.

In einer Weiterbildung des Verfahrens können die Tiefe der Profile und/oder Struktur der ersten und/oder zweiten und/oder weiteren Kunststoffschichten in Abhängigkeit der Dicke der ersten und/oder zweiten und/oder weiteren Kunststoffschichten ausgebildet werden. Die Profile und/oder Struktur sind dabei an die Dicke der anderen Kunststoffschichten angepasst, so dass je nach Dicke einer anderen Kunststoffschicht ein optimaler homogener Farbverlauf bzw. Farbübergang erreicht wird.

Die Profile und/oder Struktur der ersten und/oder zweiten und/oder weiteren Kunststoffschichten können über die Fläche verteilt gleichmäßig oder ungleichmäßig ausgebildet werden. Weiterhin werden erfindungsgemäß die Profile und/oder Struktur der weiteren Kunststoffschichten über die Fläche mit Erhebungen und/oder Vertiefungen ausgebildet, welche pyramidenförmig, zylindrisch, oder quadratisch sind. Die Erhebungen und/oder Vertiefungen können in Reihen, welche versetzt zueinander angeordnet sein können, ausgebildet werden. In Kombination mit einer gleichmäßigen oder ungleichmäßigen Verteilung der Profile und/oder Struktur über die Fläche können dabei verschiedene Farbübergänge erreicht werden.

Der Rohling kann im Wesentlichen rechteckig, rund oder oval ausgebildet werden.

Weiterhin kann der Rohling an der Mantelfläche mit Ausnehmungen und/oder Vorsprüngen für die Aufnahme in eine Bearbeitungsmaschine, wie beispielsweise eine Fräsmaschine, ausgebildet werden. Die Ausnehmungen und/oder Vorsprünge können auch für den Transport des Rohlings dienen.

Als Kunststoff für die Herstellung eines Rohlings kann Polyvinylidenfluorid (PVDF), Polyvinylidenfluorid (PVDF) mit Glas- oder Faserglasbeimischungen, Methylmethacrylat (MMA), Polymethylmethacrylat (PMMA), Polymethacrylmethylimid (PMMI), Methylmethacrylat-Copolymer, Methylmethacrylat-Styrol-Copolymer oder ein Kunststoff, der anteilig die vorher genannten Kunststoffe und/oder eine Kobalt-Chrom-Molybdänlegierung, Keramik, Glasfasern, Aluminiumoxid (Al₂O₃), Zirkonoxid (ZrO₂), (Fluor-)Aluminiumsilikate mit oder ohne Glaspulver, ein 2-Hydroxyethylmethacrylat-Methylmethacrylat-Copolymer, ein Styrol-Maleinsäureanhydrid-Copolymer, ein Acrylpolymer oder ein Acrylsäure-Maleinsäure-Copolymer als Zusatz enthält, verwendet werden.

Außerdem kann eine Einlage für einen Prothesenkörper in mindestens eine der Kunststoffschichten eingebracht werden. Die Einlage kann bei einem Spritzgussvorgang von mindestens einer der ersten, zweiten oder weiteren Kunststoffschichten umschlossen werden. Dadurch wird ein Rohling für künstliche Zähne erhalten, wobei die Zähne anschließend nicht auf eine Brücke oder sonstige Prothesenkörper aufgebracht werden müssen, sondern lediglich aus dem Rohling herausgefräst werden können und schon mit einer Einlage verbunden sind.

Die Aufgabe der vorliegenden Erfindung wird zudem durch einen Rohling für künstliche Zähne gelöst, welcher mehrere unterschiedliche Farbschichten aufweist, wobei der Rohling nach einem der erfindungsgemäßen Verfahren hergestellt ist. Der Rohling kann für die Weiterverarbeitung zu Konus- oder Teleskopkronen, Implantataufbauten, Implantatgerüsten, Monolitgerüsten, Aufbißschienen oder totalen oder partiellen Prothesenkörpern vorgesehen sein. Dabei können in einem derartigen Rohling auch Verbindungs- und/oder Halteelemente, wie beispielsweise eine Transversalplatte, ein Bügelprofil, ein Klammerprofil oder andere Mittel, vorgesehen sein und bei der Herstellung eines solchen Rohlings in diesen eingebracht werden.

Ein erfindungsgemäßer Rohling besteht dabei aus einem thermoplastischen Kunststoff und ist im Mehrkomponentenspritzgussverfahren hergestellt worden, wobei auf eine erste Kunststoffschicht mit einer ersten Pigmentierung eine weitere Kunststoffschicht aus dem gleichen Kunststoff mit einer helleren Pigmentierung gegenüber der ersten Kunststoffschicht aufgebracht ist. Bei einem erfindungsgemäßen Rohling kann die erste Kunststoffschicht an der Seite, auf die die zweite Kunststoffschicht aufgebracht ist, mindestens teilweise mit einem Profil und/oder einer Struktur ausgebildet sein und an der anderen Seite eine homogene Oberfläche aufweisen. Auch können mehrere Kunststoffschichten übereinander angeordnet sein, wobei die letzte Kunststoffschicht außen an einer Deckseite eine homogene Oberfläche aufweist.

Die Dicke der ersten und/oder zweiten und/oder weiteren Kunststoffschichten kann variabel ausgebildet sein und die Tiefe der Profile und/oder Struktur der ersten und/oder zweiten und/oder weiteren Kunststoffschichten kann variabel ausgebildet sein.

Die Tiefe der Profile und/oder Struktur der ersten und/oder zweiten und/oder weiteren Kunststoffschichten kann in Abhängigkeit der Dicke der ersten und/oder zweiten und/oder weiteren Kunststoffschichten ausgebildet sein. Darüber hinaus können die Profile und/oder Struktur der ersten und/oder zweiten und/oder weiteren Kunststoffschichten über die Fläche verteilt gleichmäßig oder ungleichmäßig ausgebildet sein, wobei die Profile und/oder Struktur der ersten und/oder zweiten und/oder weiteren Kunststoffschichten über die Fläche mit Erhebungen und/oder Vertiefungen ausgebildet sind, welche pyramidenförmig, zylindrisch, oder quadratisch sind.

Dabei kann der Rohling im Wesentlichen in Form einer Scheibe ausgebildet sein, wobei der Rohling darüber hinaus im Wesentlichen rechteckig, rund oder oval ausgebildet sein kann.

Zudem kann der Rohling an der Mantelfläche mit Ausnehmungen und/oder Vorsprüngen für die Aufnahme in eine Bearbeitungsmaschine ausgebildet sein.

Weiterhin kann der Kunststoff, der für den Rohling verwendet wird, Polyvinylidenfluorid (PVDF), Polyvinylidenfluorid (PVDF) mit Glas- oder Faserglasbeimischungen, Methylmethacrylat (MMA), Polymethylmethacrylat (PMMA), Polymethacrylmethylimid (PMMI), Methylmethacrylat-Copolymer, Methylmethacrylat-Styrol-Copolymer oder ein Kunststoff, der anteilig die vorher genannten Kunststoffe und/oder eine Kobalt-Chrom-Molybdänlegierung, Keramik, Glasfasern, Aluminiumoxid (Al₂O₃), Zirkonoxid (ZrO₂), (Fluor-)Aluminiumsilikate mit oder ohne Glaspulver, ein 2-Hydroxyethylmethacrylat-Methylmethacrylat-Copolymer, ein Styrol-Maleinsäureanhydrid-Copolymer, ein Acrylpolymer oder ein Acrylsäure-Maleinsäure-Copolymer als Zusatz enthält, sein.

In einer weiteren Ausführung kann in dem Rohling eine Einlage für einen Prothesenkörper in mindestens eine der Kunststoffschichten eingebracht sein.

Die Vorteile der Erfindung, die eingangs für das Verfahren angegeben worden sind, gelten in gleicher Weise für einen nach dem Verfahren hergestellten Rohling.

Weitere Vorteile und Merkmale der Erfindung gehen aus der Figurenbeschreibung und den Zeichnungen hervor, welche beispielhaft die Erfindung zeigen. Die in den Figuren dargestellten Ausführungsformen und Maßstäbe sind dabei nicht einschränkend zu verstehen.

Dabei zeigt:
- Figur 1: einen Teil eines mehrere Farbschichten aufweisenden Rohlings;
- Figur 2: eine Draufsicht auf einen Rohling;
- Figur 3: einen Schnitt durch den in Figur 2 gezeigten Rohling;
- Figur 4: eine perspektivische Ansicht eines Rohlings; und
- Figur 5: einen Schnitt durch einen Rohling mit Einlage.

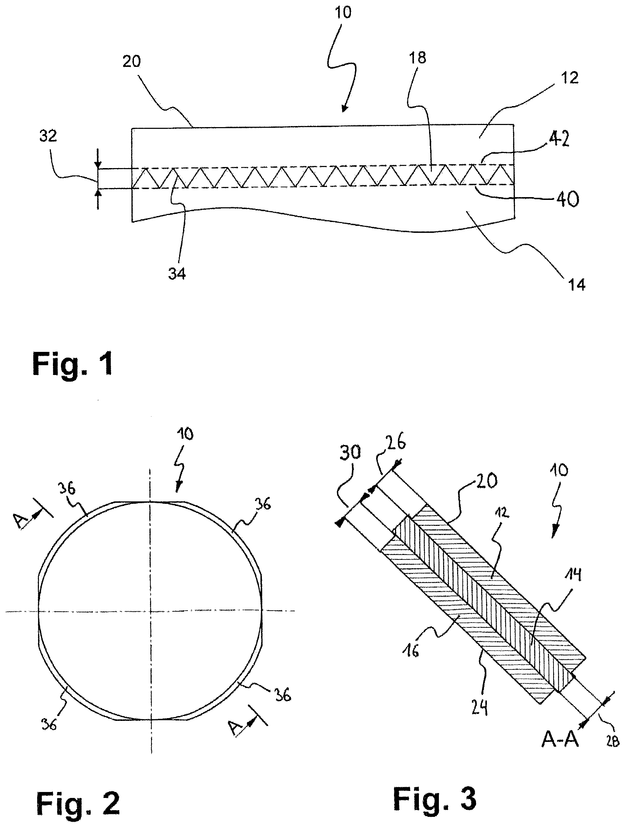

Figur 1 zeigt einen Teil eines mehrere Farbschichten aufweisenden Rohlings 10. Eine Seite 20 der ersten Kunststoffschicht 12 ist glatt ausgebildet und weist auf der der Seite 20 gegenüberliegenden Seite 18 ein Profil 34 auf. Auf das Profil 34 der ersten Kunststoffschicht 12 ist eine zweite Kunststoffschicht 14 aufgespritzt, die in Figur 1 nur teilweise dargestellt ist. Das Profil 34 weist eine Profiltiefe 32 auf, dargestellt durch die gestrichelten Linien. Das Profil 34 ist pyramidenförmig ausgebildet.

Nach dem Aufspritzen der zweiten Kunststoffschicht 14 auf die profilierte/strukturierte Seite 18 der ersten Kunststoffschicht 12 verschmelzen die beiden Kunststoffschichten 12 und 14 miteinander, wodurch sich ein homogener Farbübergang von der ersten Kunststoffschicht 12 zu der zweiten Kunststoffschicht 14 hin ergibt. Die beiden Kunststoffschichten 12 und 14 bestehen aus dem gleichen Kunststoff, weisen jedoch eine unterschiedliche Pigmentierung auf. Beispielsweise kann die Pigmentierung der ersten Kunststoffschicht 12 dunkler als die Pigmentierung der zweiten Kunststoffschicht 14 sein. Durch das Profil 34 der ersten Kunststoffschicht 12 verschmilzt der Kunststoff der ersten Kunststoffschicht 12 in der profilierten/strukturierten Seite 18 der ersten Kunststoffschicht 12 im Bereich 40 mit der zweiten Kunststoffschicht 14 stärker als im Bereich 42.

Durch das Profil 34 kann somit festgelegt werden, wie stark bzw. schnell ein Farbübergang der ersten Kunststoffschicht 12 und der zweiten Kunststoffschicht 14 ausgebildet wird. Ein Verschmelzen und Vermischen der beiden Kunststoffschichten 12 und 14 erfolgt weiter über die Bereiche 40 und 42 hinaus. Dies wird zum Teil dadurch erreicht, dass beide Kunststoffe der Kunststoffschichten 12 und 14 in einem im Wesentlichen flüssigen bzw. zähflüssigen Zustand bei dem Aufspritzen der zweiten Kunststoffschicht 14 auf die erste Kunststoffschicht 12 vorliegen. Zumindest ist die erste Kunststoffschicht 12 noch nicht erstarrt, wenn die zweite Kunststoffschicht 14 auf die profilierte Seite 18 der ersten Kunststoffschicht 12 aufgespritzt wird.

Ein Vermischen der beiden Kunststoffschichten 12 und 14 kann je nach eingestellten Parametern einer Spritzgussmaschine bzw. Spritzgussvorrichtung und des Spritzgussvorgangs bis zu einem Vielfachen der Profiltiefe 32 in die jeweils andere Schicht der beiden Kunststoffschichten 12 und 14 erfolgen.

Die Ausgestaltung der Profile 34 beeinflusst das Maß, inwieweit die Kunststoffe der beiden Kunststoffschichten 12 und 14 miteinander verschmelzen und wie weit das Verschmelzen einer Kunststoffschicht in die andere Kunststoffschicht hinein erfolgt. Bei einem Profil 34, das beispielsweise eine große Profiltiefe 32 aufweist und spitz zulaufend ausgebildet ist, wird ein langsamer homogener Farbübergang erzielt. Bei geringeren Profiltiefen ergibt sich hingegen ein schnellerer Farbübergang.

Durch das Verschmelzen der Kunststoffe der ersten und zweiten Kunststoffschichten 12 und 14 durch das Profil 34 werden Farbübergänge mit Trennlinien, wie sie im Stand der Technik vorkommen, grundsätzlich vermieden.

Figur 2 zeigt eine Draufsicht auf einen Rohling 10, der mit Vorsprüngen 36 ausgebildet ist. Die Vorsprünge 36 dienen dazu, den Rohling 10 in einer Bearbeitungsmaschine, beispielsweise einer Fräsmaschine, festzuhalten und zu bearbeiten. Jedoch kann ein Rohling 10 auch mit Ausnehmungen oder anders ausgestalteten Vorsprüngen 36 ausgebildet sein.

Figur 3 zeigt einen Schnitt durch den in Figur 2 gezeigten Rohling 10. Der Rohling 10 weist eine erste Kunststoffschicht 12, eine zweite Kunststoffschicht 14 und eine dritte Kunststoffschicht 16 auf. Die erste Kunststoffschicht 12 weist eine Seite 20 mit einer glatten Oberfläche auf. Auch die dritte Kunststoffschicht 16 weist eine glatte Deckseite 24 auf. Wie aus Figur 3 entnommen werden kann, ist die zweite Kunststoffschicht 14 im Umfang des Rohling 10 breiter ausgestaltet als die anderen beiden Kunststoffschichten 12 und 16. Diese breitere Ausgestaltung der zweiten Kunststoffschicht 14 bildet die in Figur 2 gezeigten Vorsprünge 36. Die erste Kunststoffschicht 12 weist eine Dicke 26, die zweite Kunststoffschicht 14 eine Dicke 28 und die dritte Kunststoffschicht 16 eine Dicke 30 auf. Die Profile der verschiedenen Kunststoffschichten 12, 14, 16 sind in Figur 3 nicht dargestellt.

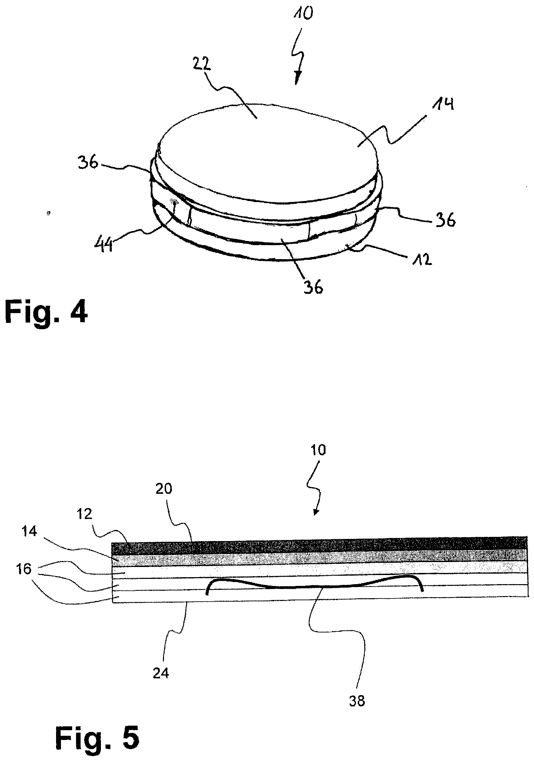

Figur 4 zeigt eine perspektivische Ansicht eines Rohlings 10, in dem ein Farbübergang von einer ersten Kunststoffschicht 12 zu einer zweiten Kunststoffschicht 14 schematisch dargestellt ist. Der Rohling 10 weist ebenso wie der in den Figuren 2 und 3 gezeigte Rohling 10 Vorsprünge 36 auf, die sich in einem Übergangsbereich 44 zwischen der ersten Kunststoffschicht 12 und der zweiten Kunststoffschicht 14 befinden. Das Profil 34 der ersten Kunststoffschicht 12 befindet sich auch in dem Übergangsbereich 44.

Die in Figur 4 gezeigte Farbabstufung ist nur beispielhaft und soll das Vermischen der ersten Kunststoffschicht 12 mit der zweiten Kunststoffschicht 14 in dem Übergangsbereich 44 verdeutlichen. Jedoch weisen ein erfindungsgemäßer Rohling 10 und ein nach dem erfindungsgemäßen Verfahren hergestellter Rohling 10 keine Trennlinien bzw. Trennbereiche, wie in Figur 4 und auch in Figur 5 dargestellt, auf. Die in den Figuren 4 und 5 gewählte Darstellungsform dient lediglich zum Veranschaulichen der Erfindung und zur vereinfachten Darstellung des Aufbaus eines erfindungsgemäßen Rohlings 10 sowie des Verfahrens zu dessen Herstellung.

Figur 5 zeigt einen Schnitt durch einen Rohling 10 mit einer Einlage 38. Die Einlage 38 ist in weiteren Kunststoffschichten 16 mit eingespritzt. Der Rohling 10 mit der Einlage 38 kann zur Weiterverarbeitung zu Konus- oder Teleskopkronen, Implantataufbauten, Implantatgerüsten, Monolithgerüsten, Aufbissschienen oder totalen oder partiellen Prothesenkörpern vorgesehen sein. Die Einlage 38 besteht dabei aus einem Metall (beispielsweise Titan, Gold, sowie andere Metalle und deren Legierungen) oder auch aus einem Kunststoff. Bei dem in Figur 5 gezeigten Rohling 10 wird zuerst die erste Kunststoffschicht 12 in die erste Kavität einer Spritzgussform eingespritzt und ein Profil 34 in der ersten Kunststoffschicht 12 ausgebildet. Anschließend wird die zweite Kunststoffschicht 14 auf die erste Kunststoffschicht 12 aufgespritzt, wobei auch die zweite Kunststoffschicht 14 mit einem Profil ausgebildet wird. Anschließend werden weitere Kunststoffschichten 16 auf die zweite Kunststoffschicht 14 bzw. die weiteren Kunststoffschichten 16 aufgespritzt. Nach dem Aufspritzen der ersten weiteren Kunststoffschicht 16 auf die zweite Kunststoffschicht 14 wird die Einlage 38 in die Spritzgussform eingebracht und auf die erste weitere Kunststoffschicht 16 aufgesetzt. Anschließend wird eine zweite weitere Kunststoffschicht 16 auf die erste weitere Kunststoffschicht 16 aufgespritzt, wobei die Einlage 38 teilweise von der zweiten weiteren Kunststoffschicht 16 umschlossen und mit dem bis dahin gefertigten Rohling 10 verbunden wird. Anschließend wird eine dritte und letzte weitere Kunststoffschicht 16 auf die zweite weitere Kunststoffschicht 16 aufgespritzt, wobei die Einlage 38 teilweise in der letzten weiteren Kunststoffschicht 16 aufgenommen und von der letzten weiteren Kunststoffschicht 16 umschlossen wird.

Die Einlage 38 kann dabei die Position der nachher herauszufräsenden Zähne bzw. der Zahnprothese definieren. In diesem Fall ist vorgesehen, dass die einzelnen Kunststoffschichten 12, 14 und 16 des Rohlings 10 nur im Bereich der Einlage mit Profilen ausgebildet werden, um in diesem Bereich einen homogenen Farbübergang für künstliche Zähne bereitzustellen.

Als Material für den Rohling können sämtliche Kunststoffe verwendet werden, die geeignet sind, um als Zahnersatz für künstliche Zähne zu dienen und thermoplastische Eigenschaften aufweisen. Darüber hinaus ist es auch möglich, die Seite 20 der ersten Kunststoffschicht 12 und die Deckseite 24 der dritten Kunststoffschicht 16 jeweils mit einer weiteren Schutzschicht zu versehen, welche den Rohling 10 vor Beschädigungen, beispielsweise beim Transport, schützt.

### Bezugszeichenliste

- 10: Rohling
- 12: erste Kunststoffschicht
- 14: zweite Kunststoffschicht
- 16: dritte Kunststoffschicht
- 18: profilierte/strukturierte Seite der ersten Kunststoffschicht
- 20: Seite der ersten Kunststoffschicht
- 22: Deckseite der zweiten Kunststoffschicht
- 24: Deckseite der dritten Kunststoffschicht
- 26: Dicke der ersten Kunststoffschicht
- 28: Dicke der zweiten Kunststoffschicht
- 30: Dicke der dritten Kunststoffschicht
- 32: Profiltiefe
- 34: Profil
- 36: Vorsprung
- 38: Einlage
- 40: Bereich
- 42: Bereich
- 44: Übergangsbereich

## Patentansprüche

1. Verfahren zum Herstellen eines mehrere unterschiedliche Farbschichten aufweisenden Rohlings (10) für künstliche Zähne aus Kunststoff, der in eine Form unter Druck eingebracht wird, wobei der Rohling (10) aus einem thermoplastischen Kunststoff besteht und im Mehrkomponentenspritzgussverfahren in eine erste Kavität in einer Spritzgussform eine erste Kunststoffschicht (12) mit einer ersten Pigmentierung eingebracht und in mindestens einer zweiten Kavität in der Spritzgussform mindestens eine weitere Kunststoffschicht (14) aus dem gleichen Kunststoff mit einer abweichenden Pigmentierung gegenüber der ersten Kunststoffschicht (12) eingebracht wird, **dadurch gekennzeichnet, dass** der Rohling (10) im Wesentlichen scheibenförmig ausgebildet wird, wobei die erste Kunststoffschicht (12) an der Seite (18), auf die die zweite Kunststoffschicht aufgebracht wird, mindestens teilweise mit einem Profil (34) und/oder einer Struktur ausgebildet wird und an der gegenüberliegenden Seite (20) eine homogene Oberfläche aufweist, wobei die Profile (34) und/oder Struktur der ersten und/oder zweiten Kunststoffschicht (12, 14) über die Fläche mit Erhebungen und/oder Vertiefungen ausgebildet werden, die pyramidenförmig, zylindrisch, oder quadratisch sind.

2. Verfahren nach Anspruch 1, **dadurch gekennzeichnet, dass** mehrere Kunststoffschichten (12, 14, 16) übereinander angeordnet sind, wobei die letzte Kunststoffschicht (16) außen an einer Deckseite (24) eine homogene Oberfläche aufweist.

3. Verfahren nach einem der vorhergehenden Ansprüche, **dadurch gekennzeichnet, dass** die Dicke (26, 28, 30) der ersten und/oder zweiten und/oder der weiteren Kunststoffschichten (12, 14, 16) variabel ausgebildet wird.

4. Verfahren nach einem der Ansprüche 1 bis 3, **dadurch gekennzeichnet, dass** die Tiefe (32) der Profile (34) und/oder Struktur der ersten und/oder zweiten und/oder weiteren Kunststoffschichten (12, 14, 16) variabel ausgebildet wird.

5. Verfahren nach einem der Ansprüche 1 bis 4, **dadurch gekennzeichnet, dass** die Tiefe (32) der Profile (34) und/oder Struktur der ersten und/oder zweiten und/oder weiteren Kunststoffschichten (12, 14, 16) in Abhängigkeit der Dicke (26, 28, 30) der ersten und/oder zweiten und/oder weiteren Kunststoffschichten (12, 14, 16) ausgebildet wird.

6. Verfahren nach einem der Ansprüche 1 bis 5, **dadurch gekennzeichnet, dass** die Profile (34) und/oder Struktur der ersten und/oder zweiten und/oder weiteren Kunststoffschichten (12, 14, 16) über die Fläche verteilt gleichmäßig oder ungleichmäßig ausgebildet werden.

7. Verfahren nach einem der Ansprüche 1 bis 6, **dadurch gekennzeichnet, dass** die Profile (34) und/oder Struktur der weiteren Kunststoffschichten (12, 14, 16) über die Fläche wellenförmig oder mit Erhebungen und/oder Vertiefungen ausgebildet werden.

8. Verfahren nach einem der vorhergehenden Ansprüche, **dadurch gekennzeichnet, dass** der Rohling (10) im Wesentlichen rechteckig, rund oder oval ausgebildet wird.

9. Verfahren nach einem der vorhergehenden Ansprüche, **dadurch gekennzeichnet, dass** der Rohling (10) an der Mantelfläche mit Ausnehmungen und/oder Vorsprüngen (36) für die Aufnahme in eine Bearbeitungsmaschine ausgebildet wird.

10. Verfahren nach einem der vorhergehenden Ansprüche, **dadurch gekennzeichnet, dass** als Kunststoff Polyvinylidenfluorid (PVDF), Polyvinylidenfluorid (PVDF) mit Glas- oder Faserglasbeimischungen, Methylmethacrylat (MMA), Polymethylmethacrylat (PMMA), Polymethacrylmethylimid (PMMI), Methylmethacrylat-Copolymer, Methylmethacrylat-Styrol-Copolymer oder ein Kunststoff, der anteilig die vorher genannten Kunststoffe und/oder eine Kobalt-Chrom-Molybdänlegierung, Keramik, Glasfasern, Aluminiumoxid (Al₂O₃), Zirkonoxid (ZrO₂), (Fluor-)Aluminiumsilikate mit oder ohne Glaspulver, ein 2-Hydroxyethylmethacrylat-Methylmethacrylat-Copolymer, ein Styrol-Maleinsäureanhydrid-Copolymer, ein Acrylpolymer oder ein Acrylsäure-Maleinsäure-Copolymer als Zusatz enthält, verwendet wird.

11. Verfahren nach einem der vorhergehenden Ansprüche, **dadurch gekennzeichnet, dass** eine Einlage (38) für einen Prothesenkörper in mindestens eine der Kunststoffschichten (12, 14, 16) eingebracht wird.

12. Rohling (10) für künstliche Zähne, mit einer Einlage (38) für einen Prothesenkörper, der in mindestens eine der Kunststoffschichten (12, 14, 16) eingebracht ist, wobei der Rohling (10) mehrere unterschiedliche Farbschichten aufweist und wobei der Rohling (10) nach einem der Verfahren der Ansprüche 1 bis 10 hergestellt ist.

13. Rohling (10) nach Anspruch 12, **dadurch gekennzeichnet, dass** der Rohling (10) für die Weiterverarbeitung zu Konus- oder Teleskopkronen, Implantataufbauten, Implantatgerüsten, Monolitgerüsten, Aufbißschienen, oder totalen oder partiellen Prothesenkörpern vorgesehen ist.

14. Rohling (10) nach Anspruch 12 oder 13, **dadurch gekennzeichnet, dass** mehrere Kunststoffschichten (12, 14, 16) übereinander angeordnet sind, wobei die letzte Kunststoffschicht (16) außen an einer Deckseite (24) eine homogene Oberfläche aufweist.

## Claims

1. Method for producing a blank (10) for artificial teeth of plastics, which is inserted under pressure, comprising a plurality of different coloured layers, wherein the blank (10) consists of a thermoplastic, and is inserted in a multi-component injection moulding method in a first cavity in an injection mould a first plastic layer (12) with a first pigmentation, and is inserted in at least a second cavity in an injection mould at least another plastic layer (14) of the same plastic with a different pigmentation compared to the first plastic layer (12), **characterized in that** the blank (10) is essentially formed disc-shaped, wherein the first plastic layer (12) is at least partly formed with a profile (34) and/or a structure on the side (18), where the second plastic layer is applied, and has a homogeneous surface on the opposite side, wherein the profiles (34) and/or structure of the first and/or second plastic layer (12, 14) are formed by the surface with elevations and/or indentations, which are pyramidal, cylindrical, or square.

2. Method according to claim 1, **characterized in that** several plastic layers (12, 14, 16) are arranged on top of each other, wherein the last plastic layer (16) has a homogeneous surface on the cover side (24) outside.

3. Method according to one of the proceeding claims, **characterized in that** the thickness (26, 28, 30) of the first and/or second and/or the further plastic layers (12, 14, 16) is formed variably.

4. Method according to one of claims 1 to 3, **characterized in that** the depth (32) of the profiles (34) and/or the structure of the first and/or second and/or further plastic layers (12, 14, 16) are formed variably.

5. Method according to one of claims 1 to 4, **characterized in that** the depth (32) of the profiles (34) and/or structure of the first and/or second and/or further plastic layers (12, 14, 16) is formed depending on the thickness (26, 28, 30) of the first and/or second and/or further plastic layers (12, 14, 16).

6. Method according to one of claims 1 to 5, **characterized in that** the profiles (34) and/or structure of the first and/or second and/or further plastic layers (12, 14, 16) are formed evenly or unevenly distributed over the surface.

7. Method according to one of claims 1 to 6, according to that the profiles (34) and/or structure of the further plastic layers (12, 14, 16) are formed undulating or with elevations and/or indentations on the surface.

8. Method according to one of the proceeding claims, **characterized in that** the blank (10) is essentially formed rectangular, circular or oval.

9. Method according to one of the proceeding claims, **characterized in that** the blank (10) is formed with recesses and/or protrusions (36) on the shell surface for the intake into a processing machine.

10. Method according to one of the proceeding claims, **characterized in that** polyvinylidene fluoride (PVDF), polyvinylidene fluoride (PVDF) with glass or fibreglass additions, methyl methacrylate (MMA), polymethyl methacrylate (PMMA), polymethyl methacrylimide (PMMI), methyl methacrylate copolymer, methyl methacrylate-styrene copolymer is used as plastic or as plastic, which contains the previously mentioned plastics and/or a cobalt-chromium-molybdenum alloy, ceramics, glass fibres, aluminium oxide (Al₂O₃), zirconium dioxide (ZrO₂), (fluoro)aluminosilicate with or without glass powder, a (2-hydroxyethyl methacrylate)-(methyl methacrylate)-copolymer, a poly(styrene-co-maleic anhydride), an acrylic polymer or a poly(acrylic acid-co-maleic acid) as addition proportionally.

11. Method according to one of the proceeding claims, **characterized in that** an insert (38) for a prosthesis body is inserted into at least one of the plastic layers (12, 14, 16) .

12. Blank (10) for artificial teeth, with an insert (38) for a prosthesis body, which is inserted into at least one of the plastic layers (12, 14, 16), wherein the blank (10) has several different colour layers, and wherein the blank (10) is produced according to one of the methods of the claims 1 to 10.

13. Blank (10) according to claim 12, **characterized in that** the blank (10) is intended for the further processing to cone or telescoping crowns, implant abutments, implant scaffolds, monolith scaffolds, occlusal splints, or total or partial prothesis bodies.

14. Blank (10) according to claim 12 or 13, **characterized in that** several plastic layers (12, 14, 16) are arranged on top of each other, wherein the last plastic layer (16) has a homogeneous surface on one cover side (24) outside.

## Revendications

1. Procédé de fabrication d'une ébauche (10) présentant plusieurs couches de couleur différentes pour des dents artificielles en matière plastique, qui est introduite dans un moule sous pression, dans lequel l'ébauche (10) est composée d'une matière thermoplastique et, selon le procédé de moulage par injection multicomposant, une première couche en matière plastique (12) avec une première pigmentation est introduite dans une première cavité dans un moule à injection, et au moins une autre couche en matière plastique (14) dans la même matière plastique avec une pigmentation s'écartant de celle de la première couche en matière plastique (12) est introduite dans au moins une deuxième cavité dans le moule à injection, **caractérisé en ce que** l'ébauche (10) est réalisée essentiellement en forme de disque, dans lequel la première couche en matière plastique (12) sur le côté (18) sur lequel est apportée la deuxième couche en matière plastique est au moins partiellement réalisée avec un profil (34) et/ou une structure et présente sur le côté opposé (20) une superficie homogène, dans lequel les profils (34) et/ou structure de la première et/ou deuxième couche en matière plastique (12, 14) sont réalisés sur la surface avec des protubérances et/ou des évidements qui sont de forme pyramidale, cylindriques ou quadratiques.

2. Procédé selon la revendication 1, **caractérisé en ce que** plusieurs couches en matière plastique (12, 14, 16) sont agencées les unes sur les autres, dans lequel la dernière couche en matière plastique (16) présente une superficie homogène à l'extérieur sur un côté de recouvrement (24).

3. Procédé selon l'une des revendications précédentes, **caractérisé en ce que** l'épaisseur (26, 28, 30) des première et/ou deuxième et/ou des autres couches en matière plastique (12, 14, 16) est réalisée de façon variable.

4. Procédé selon l'une des revendications 1 à 3, **caractérisé en ce que** la profondeur (32) des profils (34) et/ou structure des première et/ou deuxième et/ou autres couches en matière plastique (12, 14, 16) est réalisée de façon variable.

5. Procédé selon l'une des revendications 1 à 4, **caractérisé en ce que** la profondeur (32) des profils (34) et/ou structure des première et/ou deuxième et/ou autres couches en matière plastique (12, 14, 16) est réalisée en fonction de l'épaisseur (26, 28, 30) des première et/ou deuxième et/ou autres couches en matière plastique (12, 14, 16).

6. Procédé selon l'une des revendications 1 à 5, **caractérisé en ce que** les profils (34) et/ou structure des première et/ou deuxième et/ou autres couches en matière plastique (12, 14, 16) sont réalisés régulièrement ou irrégulièrement distribués sur la surface.

7. Procédé selon l'une des revendications 1 à 6, **caractérisé en ce que** les profils (34) et/ou structure des autres couches en matière plastique (12, 14, 16) sont réalisés sur la surface de façon ondulatoire ou avec des protubérances et/ou des évidements.

8. Procédé selon l'une des revendications précédentes, **caractérisé en ce que** l'ébauche (10) est réalisé essentiellement de façon rectangulaire, ronde ou ovale.

9. Procédé selon l'une des revendications précédentes, **caractérisé en ce que** l'ébauche (10) est réalisée sur la surface d'enveloppe avec des évidements et/ou des protubérances (36) pour le logement dans une machine d'usinage.

10. Procédé selon l'une des revendications précédentes, **caractérisé en ce qu'**est utilisé en tant que matière plastique un poly(fluorure de vinylidène) (PVDF), un poly(fluorure de vinylidène) (PVDF) avec des mélanges de verre ou de fibre de verre, un méthacrylate de méthyle (MMA), un poly(méthacrylate de méthyle) (PMMA), un poly(méthyl méthacrylimide) (PMMI), un copolymère de méthacrylate de méthyle, un copolymère styrol-méthacrylate de méthyle ou une matière plastique qui contient proportionnellement en tant qu'additif les matières plastiques citées précédemment et/ou un alliage cobalt-chrome-molybdène, une céramique, des fibres de verre, un oxyde d'aluminium (Al₂O₃), un oxyde de zirconium (ZrO₂), des (fluoro)silicates d'aluminium avec ou sans poudre de verre, un copolymère méthacrylate de 2-hydroxyéthyle-méthacrylate de méthyle, un copolymère styrol-anhydride maléique, un polymère acrylique ou un copolymère acide acrylique-acide maléique.

11. Procédé selon l'une des revendications précédentes, **caractérisé en ce qu'**une pièce intercalaire (38) pour un corps de prothèse est introduite dans au moins l'une des couches en matière plastique (12, 14, 16).

12. Ébauche (10) pour dents artificielles, avec une pièce intercalaire (38) pour un corps de prothèse, qui est introduite dans au moins l'une des couches en matière plastique (12, 14, 16), dans laquelle l'ébauche (10) présente plusieurs couches de couleur différentes et dans laquelle l'ébauche (10) est fabriquée selon l'un des procédés des revendications 1 à 10.

13. Ébauche (10) selon la revendication 12, **caractérisée en ce que** l'ébauche (10) est prévue pour le traitement ultérieur en couronnes télescopiques ou coniques, montages d'implant, armatures d'implant, armatures monolithes, gouttières occlusales, ou corps de prothèse entiers ou partiels.

14. Ébauche (10) selon la revendication 12 ou 13, **caractérisée en ce que** plusieurs couches en matière plastique (12, 14, 16) sont agencées les unes sur les autres, dans laquelle la dernière couche en matière plastique (16) présente une superficie homogène à l'extérieur sur un côté de recouvrement (24).
